# FASCICULE DE BREVET EUROPEEN

(11) **EP 3 722 148 B1**
(45) Date de publication et mention de la délivrance du brevet: **13.12.2023**
(21) Numéro de dépôt: 20167815.8
(22) Date de dépôt: 02.04.2020
(51) Int. Cl.: B60N 2/22, B60N 2/06, B60R 21/02, B60N 2/02, B60N 2/07

(54) **SIÈGE À DOSSIER INCLINABLE ET RABATTABLE**
SITZ MIT NEIG- UND ZUSAMMENKLAPPBARER RÜCKENLEHNE
SEAT WITH RECLINING AND FOLDING BACK

(30) Priorité: 08.04.2019 FR 1903740
(43) Date de publication de la demande: 14.10.2020
(73) Titulaire: Renault s.a.s, 92100 Boulogne Billancourt (FR)
(72) Inventeur: CHHEANG, Nakry, 78470 Saint Rémy les Chevreuses (FR); SOUVILLE, Philippe, 78180 Montigny le Bretonneux (FR)
(74) Mandataire: Renault Group

(56) Documents cités:
- WO-A1-2018/013424
- JP-A- 2001 070 089

## Description

### Domaine technique de l'invention

La présente invention concerne de manière générale l'habitabilité des véhicules automobiles.

Elle concerne plus particulièrement un siège à fixer à un châssis de véhicule automobile, comprenant :
- une assise qui est équipée de moyens de montage mobile en translation sur le châssis selon un premier axe de coulissement, et
- un dossier qui comporte une partie haute et une partie basse articulée, d'une part, sur la partie haute autour d'un premier axe de pivot, et, d'autre part, sur l'assise autour d'un second axe de pivot.

Elle concerne également un véhicule automobile comportant un tel siège.

### Etat de la technique

Une voiture embarque en général deux rangées de sièges, dont une rangée avant comportant un siège conducteur et un siège passager, et une rangée arrière située entre la rangée avant et le coffre du véhicule.

Dans ce type de véhicule, il est prévu de protéger les passagers des objets embarqués dans le coffre du véhicule (en prévision d'un freinage brutal) soit en installant une cloison fixe entre la rangée arrière de sièges et le coffre, soit en renforçant les dossiers des sièges de la rangée arrière par un capot de protection rigide.

Les sièges de la rangée arrière sont en général montés de façon fixe sur le châssis du véhicule.

Toutefois, pour assurer un confort optimal aux passagers installés dans ces sièges, il est connu du document KR19980051882 U de monter l'assise des sièges de façon coulissante vers l'avant et de scinder le dossier en deux parties articulées l'une sur l'autre et articulées sur l'assise.

De cette façon, lorsque l'usager fait coulisser l'assise vers l'avant, il fait automatiquement basculer une partie basse du dossier et descendre une partie haute de ce dossier, ce qui permet ainsi d'offrir au passager une position plus relaxante.

Dans ce document, il est alors prévu une cloison fixe entre le siège et le coffre, cette cloison fixe permettant de guider le coulissement vers le bas de la partie haute du dossier. JP2001070089A divulgue également un siège ajustable monté sur une cloison fixe.

L'inconvénient majeur de cette solution technique est qu'elle ne permet pas d'accroître le volume de chargement du coffre, du fait de la cloison fixe et du caractère non rabattable du dossier.

### Présentation de l'invention

Afin de remédier à l'inconvénient précité de l'état de la technique, la présente invention propose de monter de façon astucieuse le capot de protection sur le dossier, de façon à offrir à ce dernier la mobilité de rabattement recherchée.

Plus particulièrement, on propose selon l'invention un siège tel que défini dans l'introduction, dans lequel il est prévu un capot arrière qui est monté mobile en translation sur la partie haute du dossier selon un second axe de coulissement et qui est équipé de moyens de montage mobile en pivotement sur le châssis autour d'un troisième axe de pivot.

Ainsi, grâce à l'invention, le capot arrière de protection permet non seulement de guider le mouvement de translation de la partie haute du dossier, mais il permet en outre au dossier de basculer vers l'avant de façon à accroître le volume de chargement du coffre.

D'autres caractéristiques avantageuses et non limitatives du siège conforme à l'invention, prises individuellement ou selon toutes les combinaisons techniquement possibles, sont les suivantes :

- étant donné un plan horizontal défini par le châssis du véhicule automobile, les moyens de montage mobile en translation de l'assise sur le châssis sont agencés de telle sorte que le premier axe de coulissement soit incliné par rapport au plan horizontal d'un angle supérieur à 5 degrés, préférentiellement égal à 10 degrés ;
- les second et troisième axes de pivot sont situés à une même distance du premier axe de pivot ;
- le capot arrière s'étend sur au moins une majeure partie de la hauteur du dossier;
- les premier, second et troisième axes de pivot sont parallèles entre eux ;
- il est prévu des moyens de butée adaptés à limiter la course de l'assise par rapport au châssis le long du premier axe de coulissement ;
- il est prévu un moyen de motorisation adapté à déplacer l'assise par rapport au châssis le long du premier axe de coulissement ;
- le capot arrière est équipé d'un moyen de crochetage adapté à coopérer avec un moyen de crochetage complémentaire du châssis.

L'invention propose également un véhicule automobile comportant un châssis et un siège tel que précité monté sur le châssis.

Préférentiellement, il est prévu une rangée de sièges avant et au moins une rangée de sièges arrière, et ledit siège appartient à la rangée de sièges arrière.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### Description détaillée de l'invention

La description qui va suivre en regard des dessins annexés, donnés à titre d'exemples non limitatifs, fera bien comprendre en quoi consiste l'invention et comment elle peut être réalisée.

Sur les dessins annexés :
[fig.1] est une vue schématique de côté d'un siège conforme à l'invention représenté en position droite, sur lequel est assis un passager ;
[fig.2] est une vue homologue de celle de la figure 1, dans laquelle le siège est représenté en position inclinée ;
[fig.3] est un schéma cinématique illustrant les degrés de mobilité des composants du siège de la figure 1 ;
[fig.4] est une vue schématique en perspective de l'ossature du siège de la figure 1, représenté en position droite ;
[fig.5] est une vue homologue de celle de la figure 4, sur laquelle l'ossature du siège est représentée en position inclinée.

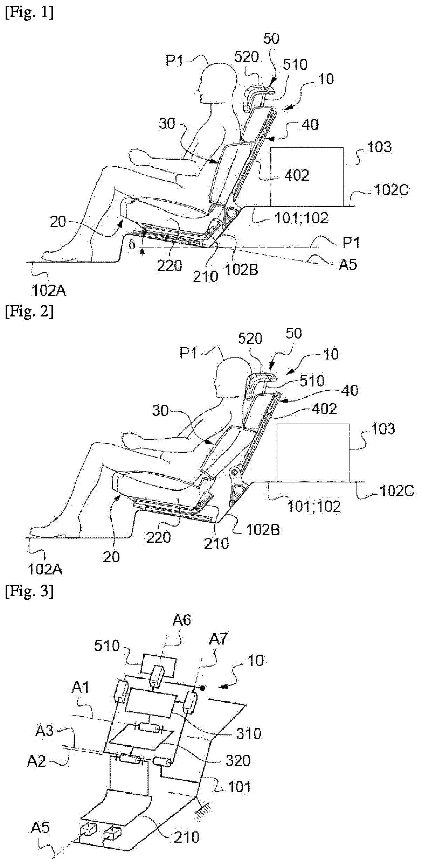

Sur la figure 1, on a représenté un siège 10 prévu pour être installé dans l'habitacle d'un véhicule automobile (voiture, car, camion...) et pour être fixé au châssis 101 de ce véhicule automobile.

On considérera ici que ce véhicule automobile est une voiture qui comporte un poste de conduite (avec notamment un volant), un siège conducteur situé en regard du poste de conduite, un siège passager situé à côté du siège conducteur et un ou plusieurs siège(s) arrière situé(s) à l'arrière des sièges conducteur et passager.

Le siège arrière, qui fait plus précisément l'objet du présent exposé, peut se présenter sous la forme d'un fauteuil adapté à recevoir un seul passager, ou d'une banquette adaptée à recevoir plusieurs passagers. On considérera ici qu'il se présente sous la forme d'un fauteuil.

Dans la suite de la description, les termes «avant » et «arrière » seront utilisés par rapport au véhicule automobile, la partie avant d'un élément désignant la partie de cet élément qui est située du côté du capot du véhicule et la partie arrière désignant la partie de cet élément qui est située du côté opposé.

Les termes «inférieur » et «supérieur » seront utilisés de la même façon, la partie inférieure d'un élément désignant la partie de cet élément qui est située du côté du plancher du véhicule et la partie supérieure désignant la partie de cet élément qui est située du côté du toit du véhicule.

Le « plan horizontal » sera un plan attaché au véhicule, qui se trouvera en position horizontale lorsque le véhicule sera situé sur une route horizontale. On pourra ici considérer que le plancher du coffre du véhicule s'étend selon ce plan horizontal.

Un « axe longitudinal » sera un axe orienté de l'avant vers l'arrière du véhicule, parallèlement à la direction d'avance du véhicule lorsque le volant est en position neutre.

Un « axe transversal » sera un axe orthogonal aux axes longitudinaux, s'étendant à l'horizontal lorsque le véhicule se trouve situé sur une route horizontale.

Comme le montrent les figures 1 et 2, le châssis 110 du véhicule automobile comporte notamment un plancher 102 qui présente ici trois niveaux, avec à l'avant un niveau inférieur 102A sur lequel le passager P1 peut reposer ses pieds, à l'arrière un niveau supérieur 102C sur lequel peuvent reposer les objets 103 posés dans le coffre du véhicule, et entre les deux un niveau intermédiaire 102B en forme de dièdre avec deux flancs sur lesquels est installé le siège arrière 10.

Ce siège arrière 10 comporte plusieurs composants, dont notamment une assise 20 prévue pour être attachée au niveau intermédiaire 102B du plancher 102 du véhicule automobile, un dossier 30 monté sur l'assise 20, un capot arrière 40 monté sur le dossier 30 et sur le niveau intermédiaire 102B du plancher 102, et un appui-tête 50 monté sur le dossier 30.

On peut tout d'abord décrire brièvement ces différents composants en référence aux figures 1 et 2.

L'assise 20 comporte une ossature 210, par exemple formée par une coque plastique ou par un cadre métallique, sur laquelle est rapportée une garniture 220, par exemple formée par une pièce de mousse expansée à la forme souhaitée.

Le dossier 30 est formé de la même façon, avec une ossature et une garniture. Toutefois, alors que l'ossature de l'assise 20 est monobloc, l'ossature du dossier est formée de deux éléments connectés entre eux.

Le capot arrière 40 comporte au moins une paroi de protection 402, par exemple en métal ou en matière plastique rigide, qui s'étend sur une majeure partie de la hauteur du dossier 30 pour protéger le passager P1 des objets 103 disposés dans le coffre (en cas de freinage brutal). Ici, pour accroître sa rigidité, cette paroi de protection 402 est fixée (ici soudée) sur un cadre tubulaire 401 en métal.

Enfin, l'appui-tête 50 comporte une ossature 510 sur laquelle est rapportée une garniture 520.

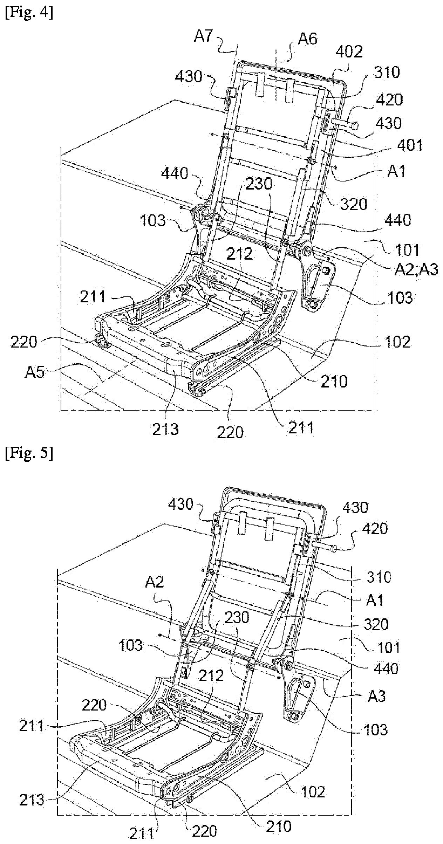

On peut maintenant décrire plus en détail l'ossature de l'assise 20 et celle du dossier 30, en référence aux figures 4 et 5.

Dans le mode de réalisation ici illustré, l'ossature 210 de l'assise 20 comporte deux flancs 211 qui s'étendent en longueur selon des axes longitudinaux et qui sont légèrement recourbés vers le haut à leurs extrémités arrière. Elle comporte également une traverse arrière 212 et une traverse avant 213 qui relient les deux flancs 211 entre eux.

Cette ossature 210 est ici en outre équipée de moyens de montage mobile en translation sur le châssis 110. Ces moyens de montage se présentent en l'espèce sous la forme de deux glissières 220. Chaque glissière 220 comporte un rail supérieur fixé sous l'un des flancs 211, et un rail inférieur monté coulissant sur le rail supérieur et équipé de moyens de fixation au plancher 102 du véhicule. Ces deux glissières 220 sont situées en parallèle et offre donc à l'assise 20 une mobilité de coulissement en translation selon un premier axe de coulissement A5 sur le plancher 102 (voir figure 3).

Ici, comme le montrent les figures 1 et 2, les glissières 220 sont fixées sur le flanc avant du niveau intermédiaire 102B du plancher 102 du véhicule, lequel flanc avant est incliné vers l'arrière d'un angle δ supérieur à 5 degrés par rapport au plan horizontal P1 (ici égal à 10 degrés). De cette façon, lorsque le passager P1 est assis sur l'assise 20 du siège arrière 10, il est bien maintenu au fond de cette assise.

Comme le montrent les figures 4 et 5, les deux parties de l'ossature du dossier 30 (appelées parties haute 310 et basse 320) comportent chacune un cadre métallique destiné à être recouvert d'une garniture distincte.

La partie basse 320 est articulée (c'est-à-dire montée librement pivotante) sur la partie haute 310 autour d'un premier axe de pivot A1, au moyen de deux axes engagés au travers d'ouvertures pratiquées dans des pattes soudées sur les deux cadres métalliques.

Le premier axe de pivot A1 est un axe transversal situé entre les deux cadres métalliques.

La partie basse 320 de l'ossature du dossier 30 est par ailleurs articulée sur l'assise 20 autour d'un deuxième axe de pivot A2.

Pour cela, l'ossature 210 de l'assise 20 comporte deux bras parallèles 230 qui s'élèvent à partir de sa traverse arrière 212 vers le dossier et qui sont fixées à cette traverse arrière. Deux axes engagés au travers d'ouvertures pratiquées dans des pattes soudées sur le cadre mécanosoudé de la partie basse 320 de l'ossature du dossier et sur ces bras parallèles 230 permettent d'assurer la mobilité en rotation de la partie basse 320 de l'ossature du dossier 30 sur l'assise 20.

Le deuxième axe de pivot A2 est un axe transversal situé entre le dossier et l'assise.

Comme cela a été exposé supra, le capot arrière 40 est prévu pour assurer la protection du passager P1 assis sur le siège arrière 10 lorsque des objets 103 sont embarqués dans le coffre du véhicule. En effet, en cas de freinage brutal ou d'accident frontal, ce capot arrière 40 est prévu pour être suffisamment rigide de façon à assurer la protection du passager P1.

Selon l'invention, le capot arrière 40 possède deux autres fonctions. Il permet en effet au dossier 30 de basculer contre l'assise 20 et il assure un guidage en translation de la partie haute 310 de l'ossature du dossier 30.

Il est à cet effet monté mobile en translation sur la partie haute 310 du dossier 30 selon un second axe de coulissement A7 et est équipé de moyens de montage mobile en pivotement sur le châssis 101 autour d'un troisième axe de pivot A3.

Pour son montage coulissant sur le dossier 30, le capot arrière 40 présente deux plaquettes 430 qui s'étendent orthogonalement à la paroi de protection 402, sur les deux côtés de celle-ci, vers l'avant. Ces deux plaquettes sont parallèles et présentent chacune une ouverture oblongue allongée selon un axe sensiblement parallèle au plan de la paroi de protection 402.

Le cadre mécanosoudé de la partie haute 310 de l'ossature du dossier 30 présente en correspondance deux ergots (non visibles sur les figures) qui sont alignés selon un même axe transversal et qui sont engagés dans ces deux ouvertures oblongues de façon à pouvoir y naviguer afin de permettre à la partie haute 310 du dossier 30 de coulisser par rapport au capot arrière 40.

Ici, cette mobilité de coulissement est le seul degré de liberté de la partie haute 310 du dossier 30 par rapport au capot arrière 40. En effet, la garniture recouvrant la partie haute 310 du dossier 30 est ajustée de façon à pouvoir coulisser le long du capot arrière 40 et à bloquer (ou au moins restreindre) tout mouvement de pivotement de la partie haute 310 du dossier 30 par rapport au capot arrière 40.

En complément, on pourrait prévoir des butées empêchant la partie haute 310 du dossier 30 de pivoter par rapport au capot arrière 40.

On observera sur la figure 1 qu'au contraire, la garniture recouvrant la partie basse 320 du dossier 30 présente à l'arrière un chanfrein le long de son bord supérieur, de façon à ne pas entraver le basculement de la partie basse 320 du dossier 30 par rapport à la partie haute 310.

Pour son montage pivotant sur le plancher 102, le capot arrière 40 porte deux flasques parallèles 440 situés dans le prolongement des plaquettes 430, du côté inférieur de la paroi de protection 402. Chacun de ces flasques parallèles 440 présente une ouverture centrée sur le troisième axe de pivot A3.

Le flanc arrière du niveau intermédiaire 102B du plancher 102 du véhicule porte en correspondance deux supports 103 qui sont fixés au plancher et qui s'élèvent en parallèle jusqu'à une extrémité présentant une ouverture centrée sur le troisième axe de pivot A3. Deux axes enfilés au travers de ces ouvertures assurent le montage pivotant du capot arrière 40 par rapport au châssis 101 du véhicule.

Les premier, second et troisième axes de pivot A1, A2, A3 sont parallèles entre eux. Les second et troisième axes de pivot A2, A3 sont en outre situés à équidistance du premier axe de pivot A1. De cette manière, ils sont susceptibles de pouvoir s'aligner l'un avec l'autre. Alors, dans cette position alignée (figure 4), le capot arrière 40 et le dossier 30 peuvent basculer autour de cet axe, de façon à ce que le dossier 30 puisse se rabattre contre l'assise 20 afin d'augmenter l'espace de chargement du coffre.

Il est prévu des moyens de blocage du pivotement du capot arrière 40 (et donc de la partie haute 310 de l'ossature du dossier 30) autour du troisième axe de pivot A3. Pour cela, le capot arrière 40 est équipé d'un moyen de crochetage 420 adapté à coopérer avec un moyen de crochetage complémentaire du châssis 101. Ce moyen de crochetage est ici formé par un ergot qui s'étend latéralement à partir du cadre tubulaire 401 du capot arrière 40 et qui est adapté à venir s'engager dans une gâche prévue en correspondance à côté du siège, sur le châssis 110.

En position crochetée, la mobilité de rabattement du capot arrière 40 et du dossier 30 contre l'assise 20 est ainsi bloquée.

Dans cette position crochetée, le dossier reste toutefois libre de s'incliner.

Pour cela, comme le montrent les figures 1 et 2, il suffit de faire coulisser l'assise 30 le long du premier axe de coulissement A5, vers l'avant, de façon à faire basculer la partie basse 320 de l'ossature du dossier 30. Ainsi le dossier passe t-il d'un angle d'inclinaison par rapport à la verticale d'environ 25 degrés à un angle d'inclinaison d'environ 45 degrés. Lors de ce mouvement, la partie haute de l'ossature du dossier 30 coulisse vers le bas le long du capot arrière 40.

Il est ici prévu des moyens de butée adaptés à limiter la course de l'assise 20 par rapport au châssis 110 le long du premier axe de coulissement A5. En effet, l'espace prévu pour les jambes entre les deux rangées de sièges étant réduit, il est préférable de contraindre la course de l'assise vers l'avant de façon à ne pas trop réduire cet espace. Ces moyens de butée sont ici intégrés aux glissières 220.

On pourrait prévoir que le déplacement de l'assise 20 par rapport au châssis 101 le long du premier axe de coulissement A5 se fasse manuellement.

Toutefois, de préférence, il est prévu un moyen de motorisation 220 adapté à assurer ce déplacement de façon autonome. Il s'agit en l'occurrence d'un moteur prévu dans la traverse avant 213 de l'ossature 210 de l'assise 20.

Enfin, on observera sur la figure 4 que la partie haute 310 de l'ossature du dossier 30 porte deux tubes d'axes A6 sensiblement verticaux, permettant d'y engager deux tiges de l'ossature 510 de l'appui-tête 50.

## Revendications

1. Siège (10) à fixer à un châssis (101) de véhicule automobile, comprenant :
- une assise (20) qui est équipée de moyens de montage mobile en translation sur le châssis (101) selon un premier axe de coulissement (A5),
- un dossier (30) qui comporte une partie haute (310) et une partie basse (320) articulée, d'une part, sur la partie haute (310) autour d'un premier axe de pivot (A1), et, d'autre part, sur l'assise (20) autour d'un second axe de pivot (A2),
**caractérisé en ce qu'**il comporte un capot arrière (40) qui est monté mobile en translation sur la partie haute (310) du dossier (30) selon un second axe de coulissement (A7) et qui est équipé de moyens de montage mobile en pivotement sur le châssis (101) autour d'un troisième axe de pivot (A3).

2. Siège (10) selon la revendication précédente, dans lequel, étant donné un plan horizontal (P1) défini par le châssis (101) du véhicule automobile, les moyens de montage mobile en translation de l'assise (20) sur le châssis (101) sont agencés de telle sorte que le premier axe de coulissement (A5) soit incliné par rapport au plan horizontal (P1) d'un angle (δ) supérieur à 5 degrés, préférentiellement égal à 10 degrés.

3. Siège (10) selon l'une des revendications précédentes, dans lequel les second et troisième axes de pivot (A2, A3) sont situés à une même distance du premier axe de pivot (A1).

4. Siège (10) selon l'une des revendications précédentes, dans lequel le capot arrière (40) s'étend sur au moins une majeure partie de la hauteur du dossier (30).

5. Siège (10) selon l'une des revendications précédentes, dans lequel les premier, second et troisième axes de pivot (A1, A2, A3) sont parallèles entre eux.

6. Siège (10) selon l'une des revendications précédentes, dans lequel il est prévu des moyens de butée adaptés à limiter la course de l'assise (20) par rapport au châssis (110) le long du premier axe de coulissement (A5).

7. Siège (10) selon l'une des revendications précédentes, dans lequel il est prévu un moyen de motorisation (220) adapté à déplacer l'assise (20) par rapport au châssis (101) le long du premier axe de coulissement (A5).

8. Siège (10) selon l'une des revendications précédentes, dans lequel le capot arrière (40) est équipé d'un moyen de crochetage (420) adapté à coopérer avec un moyen de crochetage complémentaire du châssis (101).

9. Véhicule automobile comportant un châssis (101), **caractérisé en ce qu'**il comporte un siège (10) conforme à l'une des revendications précédentes monté sur le châssis (101).

10. Véhicule automobile selon la revendication précédente, dans lequel il est prévu une rangée de sièges avant et au moins une rangée de sièges arrière, et dans lequel ledit siège (10) appartient à la rangée de sièges arrière.

## Patentansprüche

1. Sitz (10) zur Befestigung an einem Fahrgestell (101) eines Kraftfahrzeugs, umfassend:
- ein Sitzteil (20), welches mit Mitteln zur entlang einer ersten Verschiebungsachse (A5) translatorisch beweglichen Anbringung auf dem Fahrgestell (101) ausgestattet ist,
- eine Rückenlehne (30), welche einen oberen Teil (310) und einen unteren Teil (320), der einerseits am oberen Teil (310) um eine erste Schwenkachse (A1) und andererseits am Sitzteil (20) um eine zweite Schwenkachse (A2) schwenkbar angelenkt ist, aufweist,
**dadurch gekennzeichnet, dass** er eine hintere Abdeckhaube (40) aufweist, welche am oberen Teil (310) der Rückenlehne (30) translatorisch beweglich entlang einer zweiten Verschiebungsachse (A7) angebracht ist und welche mit Mitteln zur um eine dritte Schwenkachse (A3) schwenkbeweglichen Anbringung am Fahrgestell (101) ausgestattet ist.

2. Sitz (10) nach dem vorhergehenden Anspruch, wobei, wenn eine durch das Fahrgestell (101) des Kraftfahrzeugs definierte horizontale Ebene (P1) gegeben ist, die Mittel zur translatorisch beweglichen Anbringung des Sitzteils (20) auf dem Fahrgestell (101) derart ausgebildet sind, dass die erste Verschiebungsachse (A5) in Bezug auf die horizontale Ebene (P1) um einen Winkel (δ) geneigt ist, der größer als 5 Grad ist und vorzugsweise 10 Grad beträgt.

3. Sitz (10) nach einem der vorhergehenden Ansprüche, wobei sich die zweite und die dritte Schwenkachse (A2, A3) im gleichen Abstand von der ersten Schwenkachse (A1) befinden.

4. Sitz (10) nach einem der vorhergehenden Ansprüche, wobei sich die hintere Abdeckhaube (40) wenigstens über einen größten Teil der Höhe der Rückenlehne (30) erstreckt.

5. Sitz (10) nach einem der vorhergehenden Ansprüche, wobei die erste, zweite und dritte Schwenkachse (A1, A2, A3) parallel zueinander sind.

6. Sitz (10) nach einem der vorhergehenden Ansprüche, wobei Anschlagmittel vorgesehen sind, die dazu eingerichtet sind, den Weg des Sitzteils (20) in Bezug auf das Fahrgestell (101) entlang der ersten Verschiebungsachse (A5) zu begrenzen.

7. Sitz (10) nach einem der vorhergehenden Ansprüche, wobei ein Motorisierungsmittel (220) vorgesehen ist, das dazu eingerichtet ist, das Sitzteil (20) in Bezug auf das Fahrgestell (101) entlang der ersten Verschiebungsachse (A5) zu verschieben.

8. Sitz (10) nach einem der vorhergehenden Ansprüche, wobei die hintere Abdeckhaube (40) mit einem Einhakmittel (420) ausgestattet ist, das dazu eingerichtet ist, mit einem komplementären Einhakmittel des Fahrgestells (101) zusammenzuwirken.

9. Kraftfahrzeug, welches ein Fahrgestell (101) aufweist, **dadurch gekennzeichnet, dass** es einen Sitz (10) gemäß einem der vorhergehenden Ansprüche aufweist, der auf dem Fahrgestell (101) angebracht ist.

10. Kraftfahrzeug nach dem vorhergehenden Anspruch, wobei eine Reihe von Vordersitzen und wenigstens eine Reihe von Rücksitzen vorgesehen sind und wobei der Sitz (10) zu der Reihe von Rücksitzen gehört.

## Claims

1. Seat (10) to be fastened to a motor vehicle chassis (101), comprising:
- a seat pan (20) that is equipped with means for mounting so as to be able to move in translation on the chassis (101) along a first sliding axis (A5),
- a backrest (30) that has a top part (310) and a bottom part (320) articulated, on the one hand, to the top part (310) about a first pivot axis (A1), and, on the other hand, to the seat pan (20) about a second pivot axis (A2),
**characterized in that** it has a rear cover (40) that is mounted so as to be able to move in translation on the top part (310) of the backrest (30) along a second sliding axis (A7) and that is equipped with means for mounting so as to be able to pivot on the chassis (101) about a third pivot axis (A3).

2. Seat (10) according to the preceding claim, wherein, given a horizontal plane (P1) defined by the chassis (101) of the motor vehicle, the means for mounting so as to be able to move in translation of the seat pan (20) on the chassis (101) are arranged such that first sliding axis (A5) is inclined with respect to the horizontal plane (P1) by an angle (δ) greater than 5 degrees, preferentially equal to 10 degrees.

3. Seat (10) according to either of the preceding claims, wherein the second and third pivot axes (A2, A3) are situated at the same distance from the first pivot axis (A1).

4. Seat (10) according to one of the preceding claims, wherein the rear cover (40) extends over at least the majority of the height of the backrest (30).

5. Seat (10) according to one of the preceding claims, wherein the first, second and third pivot axes (A1, A2, A3) are mutually parallel.

6. Seat (10) according to one of the preceding claims, wherein stop means are provided that are designed to limit the travel of the seat pan (20) with respect to the chassis (110) along the first sliding axis (A5).

7. Seat (10) according to one of the preceding claims, wherein a drive means (220) is provided that is designed to move the seat pan (20) with respect to the chassis (101) along the first sliding axis (A5).

8. Seat (10) according to one of the preceding claims, wherein the rear cover (40) is equipped with a hooking means (420) designed to cooperate with a complementary hooking means of the chassis (101).

9. Motor vehicle having a chassis (101), **characterized in that** it has a seat (10) in accordance with one of the preceding claims mounted on the chassis (101).

10. Motor vehicle according to the preceding claim, wherein a front row of seats and at least one rear row of seats are provided, and wherein said seat (10) belongs to the rear row of seats.
